# EUROPÄISCHE PATENTSCHRIFT

(11) **EP 1 384 915 B1**
(45) Veröffentlichungstag und Bekanntmachung des Hinweises auf die Patenterteilung: **17.09.2008**
(21) Anmeldenummer: 03009100.3
(22) Anmeldetag: 19.04.2003
(51) Int. Cl.: F16F 1/38, F16F 3/087, F16F 1/54, B60G 7/02

(54) **Elastisches Lager**
Elastic mount
Support élastique

(30) Priorität: 26.07.2002 DE 10234046
(43) Veröffentlichungstag der Anmeldung: 28.01.2004
(73) Patentinhaber: AUDI AG, 85045 Ingolstadt (DE)
(72) Erfinder: Brandl, Hans Jürgen, 86706 Lichtenau (DE); Müller, Hugo, 86701 Rohrenfels (DE); Schmidt, Walter, 86643 Rennertshofen (DE)
(74) Vertreter: Asch, Konrad

(56) Entgegenhaltungen:
- EP-A- 0 400 198
- US-A- 3 620 133
- US-A- 5 181 784
- US-A- 5 655 756

## Beschreibung

Die Erfindung betrifft ein elastisches Lager, insbesondere für Radaufhängungen von Kraftfahrzeugen, gemäß dem Oberbegriff des Patentanspruches 1.

Für Radaufhängungen von Kraftfahrzeugen, aber nicht ausschließlich, kann es erforderlich sein, ein elastisches Lager zu verwenden, das sich aus einer Kombination von einem herkömmlichen Torsionslager und einem Druck-Schublager zusammensetzt. Das Torsionslager nimmt hier die bei Einfederbewegungen der Räder des Kraftfahrzeuges auftretenden Relativbewegungen auf, während über das Druck-SchubLager Radaufstands- und Seitenkräfte zu übertragen sind. Dabei ist es vorteilhaft, wenn die Federrate des Lagers in der Hochrichtung (Z-Achse) härter als in der Querrichtung (X-Achse) ausgelegt ist.

Aus US-A-5 181 784 ist ein Torsionslager mit axialem Schublager bekannt.

Aufgabe der Erfindung ist es, ein elastisches Lager der gattungsgemäßen Art zu schaffen, welches bei herstellungstechnisch günstigem Aufbau in der Hochrichtung hart und in der Querrichtung extrem weich ausgebildet ist.

Diese Aufgabe wird erfindungsgemäß mit den kennzeichnenden Merkmalen des Patentanspruches 1 gelöst. Vorteilhafte Weiterbildungen der Erfindung enthalten die Unteranspüche.

Erfindungsgemäß wird vorgeschlagen, dass das Druck-Schublager in ein Elastomerteil und ein Gleitschichtpaket mit in Querrichtung ausgerichteten druckfesten, jedoch gleitreibungsarmen Scheiben aufgeteilt ist. Die erfindungsgemäße Überlegung liegt darin, das Druck-Schublager aufzuteilen in einen Elastomerteil, der dämpfend wirkt und nur die auftretenden Schubbelastungen aufnimmt und in ein Gleitschichtpaket, das in Hochrichtung nur gering federt und deshalb hohe Druckkräfte übertragen kann, ohne jedoch die Schubweichheit des Druck-Schub-Lagern zu beeinträchtigen. Dabei können stark unterschiedliche Federraten in Hoch- und Querrichtung bei geringem erforderlichen Bauraum verwirklicht werden; ferner ist der bauliche und fertigungstechnische Aufwand eines solchen Druck-Schub-Lagers relativ gering - insbesondere, wenn das Gleitschichtpaket in einfacher Weise lose in das Elastomerteil integriert ist.

Der Elastomerteil kann dazu vorteilhaft ringförmig zwischen einem inneren, das Torsionlager aufnehmenden Lagerblock und dem äußeren rahmenförmigen Gehäuse angeordnet sein, wobei das Gleitschichtpaket innerhalb des Elastomerteiles positioniert ist. Bei der Montage des Druck-Schub-Lagers kann das Gleitschichtpaket in den ringförmigen Elastomerteil eingelegt und so in das Gehäuse verbaut werden.

Bevorzugt sind beiderseits des inneren Lagerblockes des elastischen Lagers ein Elastomerteil und ein Gleitschichtpaket angeordnet, die neben der gewünschten Federrate eine hohe Lagerdämpfung und eine Belastbarkeit des Druck-Schub-Lagers bei Ein- und Ausfederbewegungen der Räder des Kraftfahrzeuges sicherstellen.

Ferner können bevorzugt der innere Lagerblock und das rahmenförmige Gehäuse etwa quadratisch ausgebildet sein und das Druck-Schub-Lager zwischen deren einander benachbarten, zumindest im wesentlichen parallel zueinander ausgerichteten Außen- bzw. Innenwänden positioniert sein. Daraus resultieren relativ einfache und herstellungstechnisch günstige Lagerbauteile, die zudem ein geringes Einbauvolumen ergeben. Die senkrecht zu den besagten Außen- und Innenwänden liegenden Wandabschnitte können zugleich als Anschlag bzw. Wegbegrenzer des Druck-Schublagers in Querrichtung (X-Achse) ausgelegt werden.

Des weiteren ist es vorteilhaft, wenn die Scheiben des Gleitpaketes alternierend aus einem gleitfähigem Kunststoff und Stahl gebildet sind. Derartige Scheiben sind mit geringem fertigungstechnischem Aufwand in großer Stückzahl herstellbar und können abhängig von den Anforderungen verbaut werden.

Bevorzugt sind dabei die Kunststoff-Scheiben mit Gleitzusatz (z.B. Teflon) und die Stahl-Scheiben aus einem hochlegiertem, nicht rostendem Stahl gefertigt und dementsprechend auch bei rauen Einsatzbedingungen funktionssicher.

Schließlich kann es zur Einstellung gezielter Federraten und zur Vermeidung unzulässiger Ablagerungen im Druck-Schublager vorteilhaft sein, wenn das Gleitschichtpaket durch eine dazwischen befindliche Elastomerscheibe unter einer definierten Vorspannung gehalten ist.

Zwei Ausführungsbeispiele der Erfindung sind im Folgenden mit weiteren Einzelheiten näher beschrieben.

Die anliegende schematische Zeichnung zeigt einen Querschnitt durch ein elastisches Lager mit einem Torsionslager und einem Druck-Schublager, das in einen Elastomerteil und ein Gleitschichtpaket aufgeteilt ist.

Das dargestellte elastische Lager 10 setzt sich im wesentlichen aus einem Torsionslager 12 und einem Druck-Schub-Lager 14 zusammen und ist beispielsweise in der Radaufhängung eines Kraftfahrzeuges angeordnet.

Das büchsenförmige Torsionslager 12 weist eine radial innere Lagerhülse 16 auf, um die herum eine Elastomerbüchse 18 angeordnet ist, die wiederum in einer äußeren Lagerhülse 20 aufgenommen ist. Die Elastomerbüchse 18 ist an die Lagerhülsen 16, 20 anvulkanisiert.

Das Torsionslager 12 ist in einen quadratischen Lagerblock 22 eingepresst, dessen parallel zueinander liegende Außenwände 22a mit den benachbarten Innenwänden 24a eines quadratischen Gehäuses 24 jeweils das Druck-Schublager 14 aufnehmen.

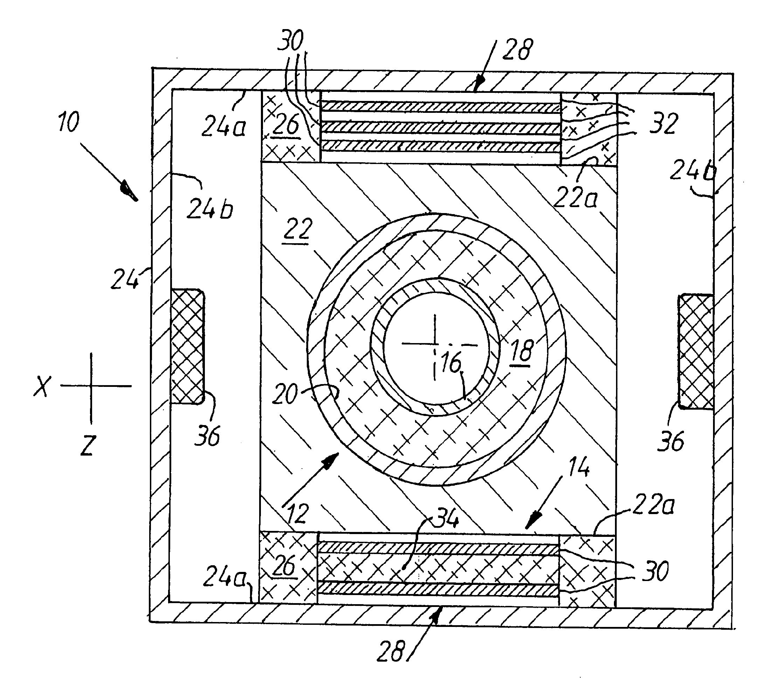

Das Druck-Schublager 14 besteht aus einem ringförmigen Elastomerteil 26, der ein Gleitschichtpaket 28 (vgl. obere Hälfte der Zeichnung) aus mehreren alternierend angeordneten Stahl-Scheiben und Kunststoff-Scheiben 30, 32 einschließt, wobei die Scheiben 30, 32 wie ersichtlich in der eingezeichneten X-Achse (= Querrichtung) ausgerichtet sind.

Die Stahl-Scheiben 30 sind dabei aus einem hochlegiertem, rostfreiem Edelstahl (z.B. NIROSTA) und die (unschraffiert dargestellten) Kunststoff-Scheiben 32 z. B. aus PTFE hergestellt.

Der Elastomerteil 26 kann in der Draufsicht gesehen kreisförmig oder z.B. quadratisch ausgeführt sein, wobei die integrierten Scheiben 30, 32 entsprechend der Innenkontur des Elastomerteiles 26 angepasst sind.

An das metallische Gehäuse 24 bzw. dessen Innenwände 24a schließen bei montiertem Druck-Schublager 14 eine Kunststoff-Scheibe 32, dann eine Stahl-Scheibe 30 usw. an, die das Gleitschichtpaket 28 bilden.

Gemäß der unteren Zeichnungshälfte kann alternativ in die Gleitschichtpakete 28 zusätzlich eine Elastomerscheibe 34 eingesetzt sein, die zwischen zwei Stahl-Scheiben 30 angeordnet ist. Mittels der Elastomerscheibe 34 sind die Scheiben 30, 32 unter einer definierten Vorspannung gehalten, während die relativen Gleitbewegungen in Querrichtung über die Scheiben 30, 32 aufgenommen werden.

Schließlich sind an den vertikal verlaufenden Innenwänden 24b des rahmenförmigen Gehäuses 24 gummielastische Anschläge 36 anvulkanisiert, die als Wegbegrenzer in Querrichtung des Druck-Schublagers 14 dienen.

Die Lagerhülse 16 kann bei einem Einsatz des elastischen Lagers an einer Radaufhängung eines Kraftfahrzeuges mit einem Radträger verbunden sein, so dass das Torsionslager 12 bei Einfederbewegungen der Räder des Kraftfahrzeuges Torsionsbewegungen gegenüber einem Radführungselement ausgleicht.

Auftretende Radaufstandskräfte und/oder Seitenkräfte auf das Radführungselement werden von dem Druck-Schublager 14 bei Hochkräften (in der eingezeichneten Z-Achse) mit einer hohen Federrate über das Gleitschichtpaket 28 und bei Querkräften mit einer weit geringeren Federrate von dem ringförmigen Elastomerteil 26 aufgenommen.

Selbstverständlich ist auch eine kombinierte Belastung in den beiden Belastungsrichtungen im Fahrbetrieb gegeben, wobei aufgrund der guten Gleiteigenschaften mit geringer Reibung zwischen den Scheiben 30, 32 des Gleitschichtpaketes 28 die Federrate (Weichheit) in Querrichtung nicht wesentlich beeinträchtigt wird.

## Patentansprüche

1. Elastisches Lager (10), insbesondere für Radaufhängungen von Kraftfahrzeugen, mit einem inneren Torsionslager (12) und einem radial äußeren Druck-Schublager (14), das in einem Gehäuse (24) aufgenommen in Hochrichtung (Z-Achse) relativ steif und in Querrichtung (X-Achse) auf Schub belastet relativ weich ausgebildet ist, **dadurch gekennzeichnet, dass** das Druck-Schublager (14) in ein Elastomerteil (26) und ein Gleitschichtpaket (28) mit in Querrichtung ausgerichteten druckfesten, jedoch gleitreibungsarmen Scheiben (30, 32) aufgeteilt ist.

2. Lager nach Anspruch 1, **dadurch gekennzeichnet, dass** der Elastomerteil (26) ringförmig zwischen einem inneren, das Torsionlager (12) aufnehmenden Lagerblock (22) und dem äußeren rahmenförmigen Gehäuse (24) angeordnet ist und dass das Gleitschichtpaket (28) innerhalb des Elastomerteiles (26) positioniert ist.

3. Lager nach Anspruch 2, **dadurch gekennzeichnet, dass** beiderseits des inneren Lagerblockes (22) ein Elastomerteil (26) und ein Gleitschichtpaket (28) angeordnet sind.

4. Lager nach den Ansprüchen 2 und 3, **dadurch gekennzeichnet, dass** der innere Lagerblock (22) und das rahmenförmige Gehäuse (24) etwa quadratisch ausgebildet sind und dass das Druck-Schublager (14) zwischen deren einander benachbarten, zumindest im wesentlichen parallel zueinander ausgerichteten Außen- bzw. Innenwänden (22a, 24a) positioniert ist.

5. Lager nach einem oder mehreren der Ansprüche 1 bis 4, **dadurch gekennzeichnet, dass** die Scheiben (30, 32) des Gleitschichtpaketes (28) alternierend aus einem gleitfähigem Kunststoff und Stahl gebildet sind.

6. Lager nach Anspruch 5, **dadurch gekennzeichnet, dass** die Kunststoff-Scheiben (32) aus PTFE bestehen.

7. Lager nach einem oder mehreren der Ansprüche 1 bis 6, **dadurch gekennzeichnet, dass** die Stahl-Scheiben (30) aus Edelstahl hergestellt sind.

8. Lager nach einem oder mehreren der vorhergehenden Ansprüche, **dadurch gekennzeichnet, dass** das Gleitschichtpaket (28) durch eine zwischenliegende Elastomerscheibe (34) unter Vorspannung gehalten ist.

## Claims

1. Elastic bearing (10), particularly for wheel suspensions in motor vehicles, with an inner torsion bearing (12) and a radial, outer thrust-bearing (14) that is taken up in a vertical direction (Z-axis) in a housing (24), is relatively rigid and is relatively supple, under the loading of a thrust force, in a transverse direction (X-axis), **characterized in that** the thrust-bearing (14) is divided up into an elastomeric section (26) and a sliding-layer set (28) with disks (30, 32) that are pressure-resistant in a transverse direction but nevertheless show low levels of sliding friction.

2. Support in accordance with claim 1, **characterized in that** the elastomeric section (26) is disposed in an annular arrangement between an inner bearing-block (22), which takes up the torsion bearing (12), and the outer framework housing (24), and the sliding-layer set (28) is positioned within the elastomeric section (26).

3. Bearing in accordance with claim 2, **characterized in that** an elastomeric section (26) and a sliding-layer set (28) are disposed on both sides of the inner bearing block (22).

4. Bearing in accordance with claims 2 and 3, **characterized in that** the inner bearing block (22) and the framework housing (24) are roughly square, and **in that** the thrust-bearing (14) is positioned between outer and inner faces (22a, 24a) that are adjacent to each other and are aligned essentially parallel to each other.

5. Bearing in accordance with one or more of claims 1 to 4, **characterized in that** the disks (30, 32) of the sliding-layer set (28) comprises alternating sliding plastic and steel.

6. Bearing in accordance with claim 5, **characterized in that** the plastic disks (32) are made of PTFE.

7. Bearing in accordance with one or more of claims 1 to 6, **characterized in that** the steel disks (30) are made of fine steel.

8. Bearing in accordance with one or more of the preceding claims, **characterized in that** the sliding-layer set (28) is tensioned by an intermediate, elastomeric disk (24).

## Revendications

1. Support élastique (10), en particulier pour suspensions de roues de véhicules automobiles, avec un palier de torsion (12) intérieur et un palier de poussée de pression (14) radialement extérieur, qui, reçu dans un boîtier (24), est réalisé de manière relativement rigide dans le sens vertical (axe Z) et de manière relativement souple sollicité à la poussée dans le sens transversal (axe X), **caractérisé en ce que** le palier de poussée de pression (14) se divise en un élément en élastomère (26) et un paquet de couches de glissement (28) avec des disques (30, 32) orientés dans le sens transversal, résistants à la pression mais à faible frottement de glissement.

2. Support selon la revendication 1, **caractérisé en ce que** l'élément en élastomère (26) est agencé de façon annulaire entre un bloc support (22) intérieur recevant le palier de torsion (12) et le boîtier (24) extérieur en forme de cadre et **en ce que** le paquet de couches de glissement (28) est positionné à l'intérieur de l'élément en élastomère (26).

3. Support selon la revendication 2, **caractérisé en ce qu'**un élément en élastomère (26) et un paquet de couches de glissement (28) sont disposés des deux côtés du bloc support (22) intérieur.

4. Support selon les revendications 2 et 3,
**caractérisé en ce que** le bloc support (22) intérieur et le boîtier (24) en forme de cadre sont réalisés de manière à peu près carrée et **en ce que** le palier de poussée de pression (14) est positionné entre leurs parois extérieures ou respectivement intérieures (22a, 24a) voisines, du moins essentiellement parallèles l'une à l'autre.

5. Support selon l'une quelconque ou plusieurs des revendications 1 à 4, **caractérisé en ce que** les disques (30, 32) du paquet de couches de glissement (28) sont réalisés en alternance en une matière synthétique glissante et en acier.

6. Support selon la revendication 5, **caractérisé en ce que** les disques en matière synthétique (32) sont en PTFE.

7. Support selon l'une quelconque ou plusieurs des revendications 1 à 6, **caractérisé en ce que** les disques en acier (30) sont fabriqués en acier inoxydable.

8. Support selon l'une quelconque ou plusieurs des revendications précédentes, **caractérisé en ce que** le paquet de couches de glissement (28) est maintenu précontraint par un disque en élastomère (34) intercalaire.
